# DEMANDE DE BREVET EUROPEEN

(11) **EP 3 059 931 A1**
(43) Date de publication de la demande: **24.08.2016**
(21) Numéro de dépôt: 16156743.3
(22) Date de dépôt: 22.02.2016
(51) Int. Cl.: H04L 29/12, H04L 12/28, H04L 12/24

(54) **GESTION D'UNE INSTALLATION DOMOTIQUE FACILITANT LE REMPLACEMENT D'UN ÉQUIPEMENT**

(30) Priorité: 23.02.2015 FR 1551503
(71) Demandeur: Somfy SAS, 74300 Cluses (FR)
(72) Inventeur: GUERIN, Vianney, 74250 Fillinges (FR)
(74) Mandataire: Novaimo

(57) **Abrégé**

Une installation domotique (1) comprend une unité de contrôle (2) configurée pour exécuter une pluralité de commandes (3), et une pluralité d'équipements (4) chacun pilotable par l'exécution d'au moins l'une des commandes (3) de la pluralité de commandes (3) dont l'exécution génère l'envoi d'au moins une instruction de pilotage à une adresse de pilotage associée à l'équipement (4). Le procédé de gestion d'une telle installation comporte une étape de remplacement d'un premier équipement (4a) de la pluralité d'équipements (4), associé à une première adresse de pilotage, mise en oeuvre par une étape de remplacement physique du premier équipement (4a) par un deuxième équipement (4b) adressable par une deuxième adresse de pilotage distincte de la première adresse de pilotage, et par une étape de mise à jour de l'unité de contrôle (2). L'étape de mise à jour de l'unité de contrôle (2) comporte une étape de remplacement de la première adresse de pilotage par la deuxième adresse de pilotage dans chaque commande (3) de la pluralité de commandes (3) utilisant la première adresse de pilotage.

## Description

### Domaine technique de l'invention

L'invention concerne le domaine de la domotique.

L'invention a pour objet plus particulièrement un procédé de gestion d'une installation domotique comprenant une unité de contrôle configurée pour exécuter une pluralité de commandes, et une pluralité d'équipements chacun pilotable par l'exécution d'au moins l'une des commandes de la pluralité de commandes dont l'exécution génère l'envoi au moins une instruction de pilotage à une adresse de pilotage associée à l'équipement.

Un autre objet de l'invention est relatif à une installation domotique configurée de sorte à mettre en oeuvre le procédé de gestion.

Encore un autre objet de l'invention est relatif à une unité de contrôle comprenant les moyens matériels et/ou logiciels de mise en oeuvre du procédé de gestion.

### État de la technique

Dans le domaine de la domotique, il existe des installations domotiques permettant, par l'intermédiaire d'une unité de contrôle, de piloter une pluralité d'équipements, tels que des moteurs de volets roulants. Les équipements sont alors adressables par l'unité de contrôle grâce à des adresses de pilotage correspondantes et renseignées dans l'unité de contrôle.

Il en résulte une problématique lorsqu'un équipement tombe en panne ou doit être changé, notamment, car trop vieux. En effet, un simple remplacement de l'équipement n'est pas suffisant, puisque ce dernier ne sera pas connu de l'unité de contrôle.

Il existe donc un besoin de simplifier l'ergonomie de remplacement d'un équipement au sein d'une installation domotique pour éviter une reprogrammation manuelle fastidieuse de l'unité de contrôle consistant à supprimer les commandes avant de les ajouter à nouveau avec les paramètres du nouvel équipement.

Ce besoin a, notamment, été comblé par la solution préconisée dans le document EP 2 560 347 A1. Ce document propose de détecter le remplacement d'un équipement et de copier l'adresse de pilotage de l'équipement remplacé dans le nouvel équipement. Il en résulte que le remplacement d'un équipement défectueux ou ancien par un nouvel équipement est transparent au niveau des commandes de l'unité de contrôle qui voient, alors, toujours la même adresse de pilotage.

La solution proposée dans le document EP 2 560 347 A1 est avantageuse dans le cadre d'un remplacement de l'équipement défectueux ou ancien par le nouvel équipement. Néanmoins, elle pose un problème si l'on souhaite réintroduire l'équipement remplacé dans l'installation domotique, notamment une fois réparé si ce dernier était défectueux, en ajoutant cet équipement sans qu'il remplace un autre équipement, et dans le cadre où ledit nouvel équipement est toujours présent au sein de l'installation domotique. En effet, dans ce cas l'installation domotique présente deux équipements avec la même adresse de pilotage, et il est nécessaire d'identifier un numéro de série ou une adresse permanente en cas d'introduction d'un équipement préalablement retiré pour lui assigner une nouvelle adresse de pilotage, afin d'éviter un doublon.

En ce sens, il existe un besoin de trouver une amélioration pour faciliter la reconnaissance des équipements appartenant à l'installation domotique et éviter d'avoir deux équipements avec la même adresse de pilotage dans une même installation domotique.

On connaît également le document US 2014/0142758 A1 qui décrit une installation comprenant un ou plusieurs actionneurs connectés à un bus de communication. Chaque actionneur comprend deux potentiomètres, dont leur position respective définit une adresse de communication dans l'installation. L'adresse de pilotage d'un actionneur remplaçant un actionneur existant est sélectionnée ou modifiée au moyen des deux potentiomètres de l'actionneur remplaçant pour être la même adresse de pilotage de l'actionneur remplacé ou pour être une adresse de pilotage différente des adresses sur un bus de communication.

### Objet de l'invention

La présente invention a pour but de résoudre les inconvénients précités et de proposer un procédé de gestion d'une installation domotique, une unité de contrôle et une installation domotique associés, permettant de simplifier la gestion d'équipements.

On tend vers ce but notamment grâce à un procédé de gestion d'une installation domotique comprenant :
- une unité de contrôle configurée pour exécuter une pluralité de commandes, et
- une pluralité d'équipements, chacun pilotable par l'exécution d'au moins l'une des commandes de la pluralité de commandes, dont l'exécution génère l'envoi d'au moins une instruction de pilotage à une adresse de pilotage associée à l'équipement,
ledit procédé de gestion comportant une étape de remplacement d'un premier équipement de la pluralité d'équipements, associé à une première adresse de pilotage, mise en oeuvre par une étape de remplacement physique du premier équipement par un deuxième équipement adressable par une deuxième adresse de pilotage distincte de la première adresse de pilotage, et par une étape de mise à jour de l'unité de contrôle.

Selon l'invention, l'étape de mise à jour de l'unité de contrôle comporte une étape de remplacement de la première adresse de pilotage par la deuxième adresse de pilotage dans chaque commande de la pluralité de commandes utilisant la première adresse de pilotage.

Selon une réalisation, l'étape de mise à jour comporte une étape de sélection d'un équipement à remplacer virtuellement au sein de l'unité de contrôle sélectionnant ledit premier équipement et/ou d'un équipement remplaçant virtuellement le premier équipement au sein de l'unité de contrôle sélectionnant ledit deuxième équipement.

Selon une mise en oeuvre, l'étape de sélection de l'équipement à remplacer, ou remplaçant, virtuellement comporte une étape d'interaction d'un utilisateur avec une interface de configuration de l'unité de contrôle.

Notamment, le procédé peut comporter une étape d'appairage du deuxième équipement avec l'unité de contrôle.

Selon une réalisation, l'étape de mise à jour comporte une étape de comparaison du premier équipement et du deuxième équipement permettant de vérifier la compatibilité du deuxième équipement avec celle du premier équipement, l'étape de remplacement de la première adresse de pilotage par la deuxième adresse de pilotage étant mise en oeuvre par l'unité de contrôle uniquement si le résultat de l'étape de comparaison atteste de la compatibilité entre les premier et deuxième équipements.

Par exemple, au terme de l'étape de mise à jour, le premier équipement est supprimé de la pluralité d'équipements et remplacé par le deuxième équipement.

Notamment, l'étape de remplacement de la première adresse de pilotage par la deuxième adresse de pilotage dans chaque commande de la pluralité de commandes utilisant la première adresse de pilotage comporte les étapes suivantes :
- vérification de chaque commande de la pluralité de commandes pour détecter la présence d'une ou plusieurs occurrence(s) de la première adresse de pilotage, et
- remplacement de la première adresse de pilotage par la deuxième adresse de pilotage pour chaque occurrence détectée.

L'invention est aussi relative à une installation domotique comprenant une unité de contrôle, munie d'une pluralité de commandes, et une pluralité d'équipements, chacun accessible à partir d'une adresse de pilotage correspondante par l'activation d'au moins l'une des commandes de la pluralité de commandes, ladite installation domotique étant configurée pour mettre en oeuvre le procédé de gestion tel que décrit.

L'invention est aussi relative à une unité de contrôle d'une installation domotique, ladite unité de contrôle comprenant un dispositif d'entrée de données et un dispositif d'affichage, caractérisée en ce que l'unité de contrôle comporte des éléments matériels et/ou logiciels de mise en oeuvre du procédé de gestion conforme à ce qui a été décrit.

L'unité de contrôle peut comporter un terminal muni du dispositif d'entrée de données et du dispositif d'affichage.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue schématique d'une installation domotique conforme à un mode de réalisation de l'invention,
- la figure 2 est une vue schématique de différentes étapes du procédé de gestion de l'installation domotique illustrée à la figure 1 selon un mode d'exécution conforme à l'invention.

### Description de modes préférentiels de l'invention

Le procédé de gestion de l'installation domotique décrit ci-après diffère, notamment, de l'art antérieur en ce qu'il propose de modifier les commandes d'une unité de contrôle pour y introduire l'adresse de pilotage d'un nouvel équipement en remplacement de l'adresse de pilotage de l'équipement remplacé.

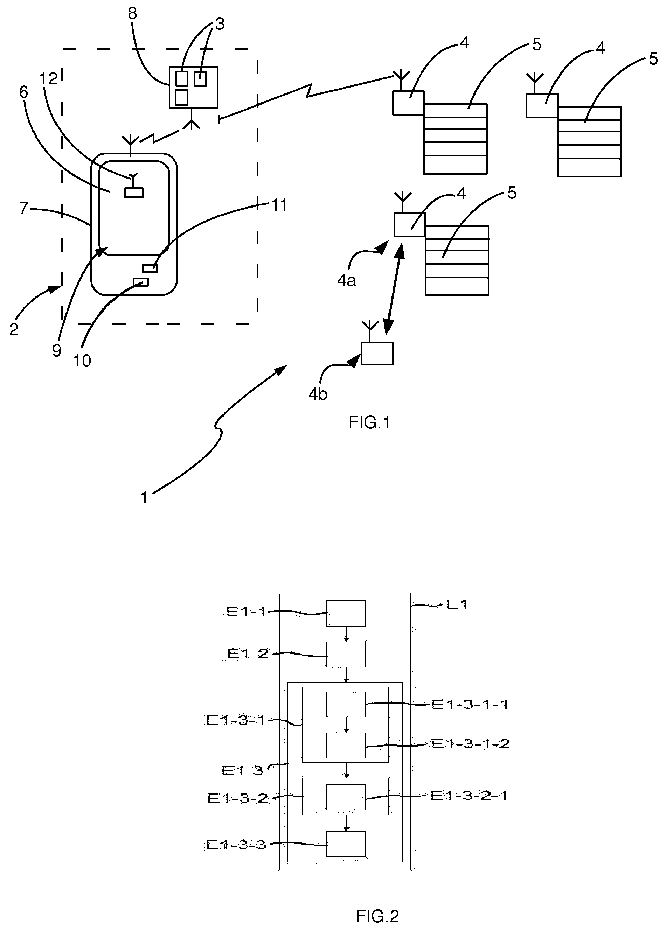

Comme illustré en figure 1, une installation domotique 1 comprend une unité de contrôle 2 munie d'une pluralité de commandes 3. En outre, l'installation domotique 1 comprend une pluralité d'équipements 4, chacun accessible à partir d'une adresse de pilotage correspondante par l'activation d'au moins l'une des commandes 3 de la pluralité de commandes 3. Autrement dit, l'unité de contrôle 2 est configurée pour exécuter une pluralité de commandes 3 et les équipements 4 de la pluralité d'équipements 4 sont chacun pilotables par l'exécution d'au moins l'une des commandes 3 de la pluralité de commandes 3, ladite exécution générant l'envoi d'au moins une instruction de pilotage à une adresse de pilotage associée à l'équipement 4. Ainsi, chacun des équipements 4 peut être piloté par une ou plusieurs des commandes 3 de la pluralité de commandes 3.

Dans la présente description, une adresse de pilotage d'un équipement 4 permet à l'unité de contrôle 2, grâce à l'utilisation d'un protocole de communication, d'envoyer audit équipement 4 ladite au moins une instruction de pilotage pour piloter/modifier son état de fonctionnement.

Lorsque l'équipement 4 reçoit via son adresse de pilotage ladite au moins une instruction de pilotage, il l'applique de sorte à modifier son état courant, à moins que ladite au moins une instruction de pilotage lui demande de conserver son état courant.

Par exemple, un équipement 4 peut être un moteur, ou autrement dit un actionneur électromécanique, d'un volet roulant 5. Dans ce cas, en s'adressant audit moteur 4 par l'envoi d'une instruction de pilotage, l'unité de contrôle 2 peut mettre en route le moteur 4 pour enrouler ou dérouler le volet roulant 5. Dans l'exemple de la figure 1, l'installation domotique 1 comporte trois moteurs 4 associés chacun à un volet roulant 5.

L'unité de contrôle 2, au sens de la présente description, peut comporter les éléments nécessaires au bon fonctionnement de l'installation domotique 1. Par exemple, l'unité de contrôle 2 peut comporter une interface de configuration 6 présentée par une télécommande à boutons, une tablette tactile ou encore un téléphone intelligent (« smartphone » en anglais). La tablette tactile ou le téléphone intelligent comporte une application embarquée adaptée. L'interface de configuration 6 permet, par exemple, de sélectionner une ou des commandes 3 à exécuter pour piloter un ou plusieurs équipements 4 par interaction avec un utilisateur, ou permet encore de définir des commandes 3 élaborées, comme des automatismes ou scénarios utilisant un ou plusieurs équipements 4. Comme illustré en figure 1 à titre d'exemple, l'interface de configuration 6, ou autrement dit interface homme machine, est portée par un élément mobile 7 (tablette tactile ou téléphone intelligent) destiné à communiquer avec un contrôleur 8 (aussi appelé « box domotique » dans le domaine) intégrant les commandes 3 et capable de communiquer avec tout ou partie des équipements 4 en fonction de la commande 3 activée. Le contrôleur 8 peut être optionnel, notamment, une application embarquée dans l'élément mobile 7 peut comporter les commandes 3 et l'élément mobile 7 peut être configuré pour communiquer directement avec les équipements 4 de la pluralité d'équipements 4.

Comme précisé ci-dessus, une commande 3 de l'unité de contrôle 2 permet d'adresser au moins une instruction de pilotage à au moins un équipement 4, par exemple pour en modifier un état de fonctionnement.

Plus particulièrement, l'unité de contrôle 2 peut transférer des données, par exemple sous forme de trame, à destination d'un ou plusieurs des équipements 4, lors de l'activation d'une commande 3.

Une commande 3 peut être un automatisme ou un scénario.

Un automatisme peut être déclenché lorsqu'un seuil est atteint, dans le cadre d'un équipement 4 de volet roulant, l'automatisme peut ouvrir le volet roulant 5, alors fermé, si un seuil de luminosité minimum est atteint ou une heure est atteinte.

Un scénario est plus complexe dans le sens où il va permettre de piloter plusieurs équipements 4. Par exemple, pour une pièce dédiée à la visualisation de contenu vidéo, un scénario peut, lorsqu'il est activé, piloter la fermeture de volets roulants 5 pour plonger la pièce dans l'obscurité, faire descendre un écran de projection d'un logement situé dans le plafond de la pièce et activer un vidéoprojecteur orienté vers l'écran de projection déroulé hors de son logement.

Selon un mode d'exécution, le procédé de gestion permet de gérer l'installation domotique 1 comprenant l'unité de contrôle 2 configurée pour exécuter une pluralité de commandes 3, et une pluralité d'équipements 4, chacun pilotable par l'exécution d'au moins l'une des commandes 3 de la pluralité de commandes 3, dont ladite exécution envoie au moins une instruction de pilotage à une adresse de pilotage associée à l'équipement 4 de la pluralité d'équipements 4. En outre, comme illustré en figure 2, le procédé de gestion comporte une étape de remplacement E1 d'un premier équipement 4a de la pluralité d'équipements 4, associé à une première adresse de pilotage, mise en oeuvre par une étape de remplacement physique E1-1 du premier équipement 4a par un deuxième équipement 4b adressable par une deuxième adresse de pilotage distincte de la première adresse de pilotage, et par une étape de mise à jour E1-3 de l'unité de contrôle 2.

L'étape de remplacement physique E1-1 consiste à démonter le premier équipement 4a et à remonter à la place le deuxième équipement 4b.

En l'état, bien que le deuxième équipement 4b remplace physiquement le premier équipement 4a, il ne peut pas encore être utilisé de manière transparente au remplacement par le procédé de gestion. Pour cela, il faut réaliser un remplacement virtuel au sein de l'unité de contrôle 2. En ce sens, l'étape de mise à jour E1-3 de l'unité de contrôle 2 comporte une étape de remplacement E1-3-1 de la première adresse de pilotage par la deuxième adresse de pilotage dans chaque commande 3 de la pluralité de commandes 3 utilisant la première adresse de pilotage. En ce sens, on comprend que le procédé de gestion est tel qu'en cas de remplacement d'un équipement 4, chacune des commandes 3 utilisant l'équipement 4 remplacé (le premier équipement 4a dans l'exemple) va être modifiée pour intégrer, à la place de l'adresse de pilotage de l'équipement 4 remplacé, l'adresse de pilotage du nouvel équipement 4 (le deuxième équipement 4b dans l'exemple), ceci permet d'éviter l'inconvénient du document EP 2 560 347 A1, puisque dans ce cas il n'est pas possible d'avoir dans une installation domotique deux équipements avec la même adresse.

Le remplacement d'un premier équipement 4a, en particulier défectueux, par un deuxième équipement 4b en mettant à jour l'adresse de pilotage au niveau de l'unité de contrôle 2 permet d'éviter de modifier les réglages et automatismes liés au deuxième équipement 4b, puisque les réglages et automatismes du premier équipement 4a sont affectés au deuxième équipement 4b.

De cette manière, le temps du remplacement d'un premier équipement 4a, en particulier défectueux, par un deuxième équipement 4b est minimisé.

En outre, l'ensemble des réglages et automatismes affectés initialement au premier équipement 4a sont réaffectés au deuxième équipement 4b, de sorte à éviter la perte de certains réglages ou automatismes.

Selon une mise en oeuvre, l'étape de mise à jour E1-3 comporte une étape de sélection E1-3-2 d'un équipement 4 à remplacer virtuellement au sein de l'unité de contrôle 2 et sélectionnant ledit premier équipement 4a. Par « remplacer virtuellement », on entend que la programmation de l'unité de contrôle 2 est modifiée de telle sorte que la première adresse de pilotage du premier équipement 4a, alors connue dans au moins l'une des commandes 3 de l'unité de contrôle 2 soit remplacée par la deuxième adresse de pilotage du deuxième équipement 4b, alors inconnue de ladite au moins l'une des commandes 3. Alternativement ou en combinaison, l'étape de mise à jour E1-3 comporte une étape de sélection E1-3-2 d'un équipement 4 remplaçant virtuellement le premier équipement 4a au sein de l'unité de contrôle 2 sélectionnant ledit deuxième équipement 4b.

Cette étape de sélection E1-3-2 peut être manuelle et réalisée par un utilisateur via l'interface de configuration 6, dans ce cas l'utilisateur peut être un installateur / dépanneur, mais peut aussi être automatique dans le sens où l'unité de contrôle 2 peut automatiquement détecter l'absence du premier équipement 4a et la présence du deuxième équipement 4b, similaire au premier équipement 4a et attribué à aucune des commandes 3, dans ce cas le remplacement virtuel peut être réalisé automatiquement par l'unité de contrôle 2.

Selon une réalisation assimilable à une sélection manuelle, telle que décrite ci-dessus, l'étape de sélection E1-3-2 de l'équipement 4 à remplacer, ou remplaçant, virtuellement peut comporter une étape d'interaction E1-3-2-1 d'un utilisateur avec l'interface de configuration 6 de l'unité de contrôle 2. Cette étape de sélection E1-3-2 peut être réalisée, préférentiellement, après l'étape de remplacement physique E1-1 du premier équipement 4a par le deuxième équipement 4b. Ladite étape d'interaction E1-3-2-1 peut consister à sélectionner, parmi une liste incluant la pluralité d'équipements 4, ledit premier équipement 4a, notamment après son remplacement par le deuxième équipement 4b.

L'étape d'interaction E1-3-2-1 peut aussi permettre de sélectionner le deuxième équipement 4b pour faciliter le travail de l'unité de contrôle 2 en lui précisant quel remplacement effectuer. Alternativement ou en combinaison, ladite étape d'interaction E1-3-2-1 peut consister à sélectionner, parmi une liste notamment incluant la pluralité d'équipements 4 après le remplacement du premier équipement 4a par le deuxième équipement 4b, ledit deuxième équipement 4b.

Pour faciliter le remplacement du premier équipement 4a par le deuxième équipement 4b dans le cadre de l'exécution du procédé de gestion, ce dernier peut comporter, avantageusement, une étape d'appairage E1-2 du deuxième équipement 4b avec l'unité de contrôle 2. Consécutivement à l'appairage, le deuxième équipement 4b est pilotable par l'unité de contrôle 2, il peut donc, par exemple, être sélectionné via l'interface de configuration 6 comme étant l'équipement 4 remplaçant le premier équipement 4a sélectionné. Une fois l'appairage réalisé, il suffit de mettre à jour la ou les commandes 3 correspondantes pour la ou les lier au deuxième équipement 4b.

Selon une réalisation, l'étape de mise à jour E1-3 comporte une étape de comparaison E1-3-3 du premier équipement 4a et du deuxième équipement 4b permettant de vérifier la compatibilité du deuxième équipement 4b avec celle du premier équipement 4a, l'étape de remplacement E1-3-1 de la première adresse de pilotage par la deuxième adresse de pilotage dans chaque commande 3 de la pluralité de commandes 3 utilisant la première adresse étant mise en oeuvre par l'unité de contrôle 2 uniquement si le résultat de l'étape de comparaison E1-3-3 atteste de la compatibilité entre les premier et deuxième équipements 4a, 4b. Bien entendu, la compatibilité du deuxième équipement 4b avec celle du premier équipement 4a n'est vérifiée qu'une seule fois, notamment, après l'appairage, et toutes les occurrences de la première adresse de pilotage dans la ou les commandes 3 peuvent consécutivement être remplacées par la deuxième adresse de pilotage.

Si la compatibilité n'est pas assurée, alors l'unité de contrôle 2 peut le notifier sur l'interface de configuration 6. Pour vérifier la compatibilité, chaque fois que l'unité de contrôle 2 est capable de dialoguer avec un nouvel équipement 4b, suite à la mise en oeuvre de l'appairage, elle peut récupérer ses caractéristiques en vue de ladite étape de comparaison 1-3-3.

On comprend de ce qui a été dit ci-dessus que, préférentiellement, au terme de l'étape de mise à jour E1-3, le premier équipement 4a est supprimé de la pluralité d'équipements 4 et remplacé par le deuxième équipement 4b, aussi bien virtuellement que physiquement. Autrement dit, au terme de l'étape de mise à jour E1-3, l'appairage entre le premier équipement 4a et l'unité de contrôle 2 peut être supprimé.

Selon une mise en oeuvre, l'étape de remplacement E1-3-1 de la première adresse de pilotage par la deuxième adresse de pilotage dans chaque commande 3 de la pluralité de commandes 3 utilisant la première adresse de pilotage comporte une étape de vérification E1-3-1-1 de chaque commande 3 de la pluralité de commandes 3 pour détecter la présence d'une ou plusieurs occurrence(s) de la première adresse de pilotage, et une étape de remplacement E1-3-1-2 de la première adresse de pilotage par la deuxième adresse de pilotage pour chaque occurrence détectée. L'étape de vérification E1-3-1-1 peut être mise en oeuvre par une fonction de recherche de la première adresse de pilotage, ladite fonction de recherche appartenant à l'unité de contrôle 2, et permettant d'identifier chacune des occurrences de l'adresse de pilotage recherchée, et l'étape de remplacement E1-3-1-2 peut être mise en oeuvre par une fonction de remplacement de la première adresse par la deuxième adresse déclenchée par la fonction de recherche à chaque identification d'une occurrence.

Selon un exemple particulier de mise en oeuvre du procédé de gestion, l'installation domotique 1 peut comporter dix volets roulants 5 chacun équipé d'un moteur 4. En partant d'une situation où l'un des moteurs 4a est hors-service, on comprend que l'étape de remplacement E1 va être mise en oeuvre. Dès lors, l'installateur / dépanneur arrive sur place et la séquence peut être la suivante :
- il remplace le moteur 4a hors service par un nouveau 4b du même type (étape E1-1 décrite ci-dessus) et réalise les réglages habituels (fins de course, etc.),
- il apparie le nouveau moteur 4b à l'unité de contrôle 2,
- dans le menu de configuration de l'unité de contrôle 2, il sélectionne le nouveau moteur 4b et clique sur un bouton "Remplacer". Alternativement ou en combinaison le moteur sélectionné peut être celui remplacé 4a.

Ensuite, toujours selon cet exemple particulier, l'unité de contrôle 2 prend la main sur la suite des opérations :
- elle vérifie que le nouveau moteur 4b dans l'installation domotique 1 est bien du même type que celui remplacé 4a, dans le cas de l'exemple une fois le moteur 4a hors service remplacé il y en a dix,
- elle cherche alors si le moteur 4b n'est associé à aucune commande 3,
- elle décide d'affecter l'adresse du moteur 4b remplaçant à la place de l'adresse du moteur 4a remplacé dans toutes les commandes 3 concernées, cette décision peut être automatique ou soumise à une demande de vérification par l'installateur via une boîte de dialogue affichée sur l'interface de configuration 6 de l'unité de contrôle 2.

Chaque équipement 4 peut aussi être associé à une télécommande correspondante mais non liée à l'unité de contrôle 2. Dans ce cas, lors d'un remplacement, il faudra alors intervenir manuellement sur la télécommande pour y déclarer le nouvel équipement 4.

Selon une réalisation, un équipement 4 peut être associé à une télécommande qui lui est propre. Cette télécommande peut être programmée de telle sorte à commander un automatisme. Dans ce cas, lors du remplacement de l'équipement 4a, l'équipement 4b remplaçant vient automatiquement avec une télécommande qui lui est associée. La télécommande permet notamment l'appairage de l'équipement 4b remplaçant avec l'unité de contrôle 2, et d'effectuer les réglages initiaux tels que les fins de course. La télécommande permet d'exécuter des commandes simples telles que la montée ou la descente d'un volet roulant.

L'invention est aussi relative à une installation domotique 1 configurée de sorte à mettre en oeuvre le procédé de gestion. En particulier, l'installation domotique 1 comprend l'unité de contrôle 2, munie d'une pluralité de commandes 3, et une pluralité d'équipements 4 chacun accessible à partir d'une adresse de pilotage correspondante par l'activation d'au moins l'une des commandes 3 de la pluralité de commandes 3. On comprend alors que l'installation domotique 1 comprend les moyens logiciels et matériels de mise en oeuvre du procédé de gestion.

Les moyens logiciels comportent des éléments de code informatique présent sur un support tel une mémoire informatique et accessibles à un système d'exploitation de l'unité de contrôle 2 pour mettre en oeuvre au moins une partie des étapes du procédé de gestion.

L'unité de contrôle 2 comporte, par exemple, la mémoire identifiée ci-dessus et un processeur permettant l'exécution d'instructions des éléments du code informatique.

L'invention est aussi relative à l'unité de contrôle 2 de l'installation domotique, ladite unité de contrôle 2 comprenant un dispositif d'entrée de données et un dispositif d'affichage. En particulier l'unité de contrôle 2 comporte des éléments matériels et/ou logiciels de mise en oeuvre du procédé de gestion conforme à ce qui a été décrit ci-avant.

L'unité de contrôle 2 peut comporter un terminal 7 muni du dispositif d'entrée et du dispositif d'affichage qui peuvent alors être formés par un écran 9 du terminal 7.

Ledit terminal 7 est avantageusement un terminal mobile, en particulier un téléphone intelligent ou une tablette.

Le terminal 7 comprend généralement un calculateur 10 et une mémoire 11. Le calculateur 10 et la mémoire 11 du terminal 7 peuvent être réalisés au moyen d'un microcontrôleur.

Ainsi, le terminal 7 permet, notamment, de saisir des données d'entrée pour mettre en fonctionnement les équipements 4 et d'afficher un état de fonctionnement de ces équipements 4.

L'unité de contrôle 2, en particulier le terminal 7, comprend des éléments matériels et/ou logiciels, notamment le calculateur 10, la mémoire 11 et/ou un microcontrôleur, ainsi qu'une application logicielle.

Les éléments matériels et/ou logiciels de l'unité de contrôle 2 et, en particulier, ceux associés au dispositif d'entrée de données peuvent comprendre un élément de sélection 12 d'un objet graphique d'un équipement 4.

Ici, l'élément de sélection 12 d'un équipement 4 est représenté par un objet graphique sur le dispositif d'affichage, notamment l'écran 9.

Les éléments matériels et/ou logiciels de l'unité de contrôle 2 et, en particulier, ceux associés au dispositif d'affichage comprennent un élément d'affichage et, plus particulièrement, l'écran 9.

Dans un mode de réalisation, le dispositif d'entrée de données et le dispositif d'affichage de l'unité de contrôle 2, en particulier du terminal 7, sont réalisés au moyen d'un écran tactile.

Bien entendu, le mode de réalisation du dispositif d'entrée de données et du dispositif d'affichage n'est nullement limitatif et peut être différent, en particulier réalisé au moyen de boutons poussoirs ou de touches sensitives pour les éléments de sélection et d'acquisition, et d'un afficheur LCD (acronyme du terme anglo-saxon « Liquid Crystal Display ») ou TFT (acronyme du terme anglo-saxon « Thin Film Transistor ») pour l'élément d'affichage.

Le dispositif d'affichage présente l'écran 9, de sorte à afficher les objets graphiques correspondant, notamment, à des scénarios, à des équipements 4 et, éventuellement, à des capteurs.

En outre, le terminal 7 peut permettre à l'utilisateur, notamment, de configurer au moins un scénario au travers duquel au moins un équipement 4 est commandé.

Par ailleurs, le terminal 7 permet à l'utilisateur d'effectuer le paramétrage de l'installation domotique 1 et d'entrer les données nécessaires au bon fonctionnement de l'installation domotique 1 au travers du dispositif d'entrée de données. Le terminal 7 permet également à l'utilisateur d'avoir un retour d'information sur l'état de fonctionnement des équipements 4 au travers du dispositif d'affichage.

L'emploi d'un terminal 7 comprenant un écran tactile 9 permet de simplifier l'utilisation de l'unité de contrôle 2 de l'installation domotique 1, de sorte que l'utilisateur appuie et, éventuellement, glisse son doigt sur les objets graphiques affichés sur l'écran tactile 9 pour entrer des données dans l'unité de contrôle 2.

## Revendications

1. Procédé de gestion d'une installation domotique (1) comprenant :
- une unité de contrôle (2) configurée pour exécuter une pluralité de commandes (3), et
- une pluralité d'équipements (4), chacun pilotable par l'exécution d'au moins l'une des commandes (3) de la pluralité de commandes (3), dont l'exécution génère l'envoi d'au moins une instruction de pilotage à une adresse de pilotage associée à l'équipement (4),
ledit procédé de gestion comportant une étape de remplacement (E1) d'un premier équipement (4a) de la pluralité d'équipements (4), associé à une première adresse de pilotage, mise en oeuvre par une étape de remplacement physique (E1-1) du premier équipement (4a) par un deuxième équipement (4b) adressable par une deuxième adresse de pilotage distincte de la première adresse de pilotage, et par une étape de mise à jour (E1-3) de l'unité de contrôle (2), **caractérisé en ce que** l'étape de mise à jour (E1-3) de l'unité de contrôle (2) comporte une étape de remplacement (E1-3-1) de la première adresse de pilotage par la deuxième adresse de pilotage dans chaque commande (3) de la pluralité de commandes (3) utilisant la première adresse de pilotage.

2. Procédé selon la revendication 1, **caractérisé en ce que** l'étape de mise à jour (E1-3) comporte une étape de sélection (E1-3-2) d'un équipement (4) à remplacer virtuellement au sein de l'unité de contrôle (2) sélectionnant ledit premier équipement (4a) et/ou d'un équipement (4) remplaçant virtuellement le premier équipement (4a) au sein de l'unité de contrôle (2) sélectionnant ledit deuxième équipement (4b).

3. Procédé selon la revendication 2, **caractérisé en ce que** l'étape de sélection (E1-3-2) de l'équipement (4) à remplacer, ou remplaçant, virtuellement comporte une étape d'interaction (E1-3-2-1) d'un utilisateur avec une interface de configuration (6) de l'unité de contrôle (2).

4. Procédé selon l'une quelconque des revendications précédentes, **caractérisé en ce qu'**il comporte une étape d'appairage (E1-2) du deuxième équipement (4b) avec l'unité de contrôle (2).

5. Procédé selon l'une quelconque des revendications 1 à 4, **caractérisé en ce que** l'étape de mise à jour (E1-3) comporte une étape de comparaison (E1-3-3) du premier équipement (4a) et du deuxième équipement (4b) permettant de vérifier la compatibilité du deuxième équipement (4b) avec celle du premier équipement (4a), l'étape de remplacement (E1-3-1) de la première adresse de pilotage par la deuxième adresse de pilotage étant mise en oeuvre par l'unité de contrôle (2) uniquement si le résultat de l'étape de comparaison (E1-3-3) atteste de la compatibilité entre les premier et deuxième équipements (4a, 4b).

6. Procédé selon l'une quelconque des revendications précédentes, **caractérisé en ce qu'**au terme de l'étape de mise à jour (E1-3), le premier équipement (4a) est supprimé de la pluralité d'équipements (4) et remplacé par le deuxième équipement (4b).

7. Procédé selon l'une quelconque des revendications précédentes, **caractérisé en ce que** l'étape de remplacement (E1-3-1) de la première adresse de pilotage par la deuxième adresse de pilotage dans chaque commande (3) de la pluralité de commandes (3) utilisant la première adresse de pilotage comporte les étapes suivantes :
- vérification (E1-3-1-1) de chaque commande (3) de la pluralité de commandes (3) pour détecter la présence d'une ou plusieurs occurrence(s) de la première adresse de pilotage, et
- remplacement (E1-3-1-2) de la première adresse de pilotage par la deuxième adresse de pilotage pour chaque occurrence détectée.

8. Installation domotique comprenant une unité de contrôle (2), munie d'une pluralité de commandes (3), et une pluralité d'équipements (4) chacun accessible à partir d'une adresse de pilotage correspondante par l'activation d'au moins l'une des commandes (3) de la pluralité de commandes (3), **caractérisée en ce qu'**elle est configurée pour mettre en oeuvre le procédé de gestion selon l'une quelconque des revendications précédentes.

9. Unité de contrôle (2) d'une installation domotique, ladite unité de contrôle (2) comprenant un dispositif d'entrée de données et un dispositif d'affichage, **caractérisée en ce que** l'unité de contrôle comporte des éléments matériels et/ou logiciels de mise en oeuvre du procédé de gestion conforme à l'une quelconque des revendications 1 à 7.

10. Unité de contrôle selon la revendication 9, **caractérisée en ce qu'**elle comporte un terminal (7) muni du dispositif d'entrée de données et du dispositif d'affichage.
